# EUROPEAN PATENT APPLICATION

(11) **EP 4 609 961 A1**
(43) Date of publication of application: **03.09.2025**
(21) Application number: 24382227.7
(22) Date of filing: 01.03.2024
(51) Int. Cl.: B08B 3/02, B05B 12/04, F16K 11/074, B08B 5/02

(54) **CLEANING SYSTEM**

(71) Applicant: Ficosa Automotive, S.L.U., 08028 Barcelona (ES)
(72) Inventor: ALCAIDE HERNÁNDEZ, Olallo, 08232 VILADECAVALLS (ES); ONORATO ESTÉVEZ, Bosco, 08232 VILADECAVALLS (ES)
(74) Representative: ZBM Patents - Zea, Barlocci & Markvardsen

(57) **Abstract**

The present disclosure relates to a cleaning system for cleaning a target surface (600), in particular, two or more target surfaces, the cleaning system comprising a chamber (101) for receiving a fluid, the chamber (101) comprising an inlet (102) for the supply of the fluid (f1) into the chamber (101); and one or more fluid outlets (103) for distributing the fluid out from the chamber (101); at least a plate (104) comprising a through hole (105) and arranged at least partially inside at least the chamber (101); an operating means (300) connected to at least the plate (104); and a control unit (ECU) configured to actuate the operating means (300), upon a washing command, for moving the plate (104) until at least the through hole (105) of the plate (104) is at least partially in fluid communication with the one, two, or more outlets (105), defining thereby at least a flow passage (108-1) for the fluid to flow out from the chamber (104) towards the target surface (600) to be cleaned according to the washing command. The system may comprise a second chamber (201) and the system may comprise a second plate (204). A method for operating a cleaning system for dispensing fluid to a target surface (600) is also provided.

## Description

The present disclosure relates to a cleaning system that may be used for a vehicle. In particular, the present cleaning system may be a fluid dispensing system for washing vehicles and/or motor vehicle parts such as sensors or optical parts. Other applications are of course possible. A method is also provided for operating a cleaning system.

### BACKGROUND

Fluid dispensing devices are known where a fluid is pumped from a fluid source by suitable pumps and discharged out towards a target surface through fluid dispensers, for example nozzles. The pumps may be connected to the corresponding fluid dispensers or nozzles so that said pumps are all operated in the same way when the fluid dispensing device is in operation.

Patent document EP3466774, filed in the name of the applicant of the present disclosure, provides a cleaning system, particularly, a fluid dispensing system comprising a fluid source to supply fluid to one or more pumps, and fluid dispensers for receiving the fluid and ejecting it towards at least one target surface. Further, at least one control unit is provided for operating at least one selected pump for supplying fluid according to a received washing command for washing at least one target surface. Also, a fluid distributor or manifold is provided. The fluid distributor has inlets to receive fluid from the pumps. Furthermore, the fluid distributor has outlets to distribute fluid towards the at least one target surface. In use, the control unit actuates at least one control valve according to a command received for washing one or more target surfaces. The at least one control valve is arranged between the manifold and the fluid dispensers for controlling the flow rate of fluid to be delivered to the target surfaces.

Although the above cleaning system has been shown to be efficient, a need still exists for simpler and more cost-effective cleaning systems.

### SUMMARY

It is an object of the present invention to provide a cleaning system. The cleaning system comprises:
- a chamber comprising one or more outlets;
- a plate including a through hole, wherein the plate is at least partially arranged inside the chamber;
- an operating means connected at least to the plate for at least moving it; and
- a control unit (electrically) connected to the operating means and configured to control the plate movement for providing at least a fluid communication between the one or more outlets and the through hole.

The fluid communication allows the fluid to be ejected or discharged onto one or more target surfaces. For this, at least a flow passage is defined by the alignment of the through hole and an outlet of the chamber for the fluid to flow out from the chamber through said outlet towards at least a target surface. Said target surface is in fluid connection at least to said outlet of the chamber. The one or more outlets of the chamber comprises said outlet or selected outlet which is an outlet selected by the control unit according to a washing command. The washing command is a request or instruction to clean a specific target surface. The washing command may be received or generated by the control unit. Thus, when a washing command is received or generated by the control unit, the control unit is configured to control the operating means to move the plate for providing at least the fluid communication between the selected outlet(s) and the through hole so as to clean a desired target surface according to the washing command.

The one or more target surfaces may comprise two or more target surfaces. Preferably, the one (or two) or more target surfaces comprise a target surface or first target surface and, optionally, more target surfaces such as a second target surface. The washing command may be a first washing command to clean the first target surface, for example, when an optical contamination is detected on the first target surface. In this case, the selected outlet(s) may be a first outlet of the chamber. As it will be described below, the first outlet of the chamber, in turn, may optionally comprise a plurality of fluid outlets. In any case, the first target surface is in fluid connection at least to the first outlet of the chamber. Further, the control unit may preferably be configured to receive or generate a second washing command to clean the second target surface, for example, when an optical contamination is detected on the second target surface. In this case, the selected outlet(s) may be a second outlet of the chamber that will be described below. The second target surface may be in fluid connection at least to the second outlet of the chamber. Thus, the plate may be moved at least from a first position to a second position, wherein the (first) fluid communication is provided in the first position and a third fluid communication may be provided in the second position as explained further below.

The chamber of the cleaning system is adapted for containing a fluid, e.g. a first fluid. The chamber, or first chamber, or first fluid chamber, may comprise a housing and an inner space, in which case the inner space is configured to contain the fluid. The chamber includes one or more inlets and one or more outlets. The one or more inlets are adapted for supplying the fluid into the chamber. Preferably, the one or more inlets may comprise a first inlet for supplying the fluid into the chamber. The one or more outlets are adapted for distributing the fluid out from the chamber towards one or more target surfaces to be cleaned. As explained, the one or more outlets may further comprise the first outlet of the chamber for distributing the fluid out from the chamber towards the first target surface. More preferably, the one or more outlets may further comprise the second outlet of the chamber, different from the first outlet, for distributing the fluid out from the chamber towards the second target surface. As explained, the one or more target surfaces to be cleaned comprises the first target surface. Preferably, the one or more target surfaces to be cleaned may further comprise the second target surface. The first target surface is in fluid connection at least to the first outlet of the chamber, wherein the second target surface may be in fluid connection at least to the second outlet of the chamber.

It is preferred that the cleaning system further comprises a second chamber. The second chamber may be adapted for receiving a fluid which may be the same or a different fluid with respect to the fluid contained by the (first) chamber. For clarity, the fluid contained or received by the second chamber is referred to as the second fluid. Thus, the second chamber may include an inner space and a housing so as to contain the second fluid. The housing of the second chamber may include sealing means as will be described below. The second chamber may include one or more inlets and one or more outlets. The one or more inlets may be adapted for supplying the second fluid into the second chamber. Preferably, the one or more inlets of the second chamber may comprise a first inlet for supplying the second fluid into the second chamber. Said first inlet of the second chamber may be independent and different from the first inlet of the (first) chamber, for the supply of the second fluid into the second chamber or inner space of the second chamber. The one or more outlets of the second chamber are adapted for distributing the second fluid out from the second chamber towards one or more target surfaces to be cleaned. The one or more outlets of the second chamber may further comprise a first outlet of the second chamber for distributing the second fluid out from the second chamber towards the first target surface. More preferably, the one or more outlets of the second chamber may further comprise a second outlet of the second chamber, different from the first outlet of the second chamber, for distributing the second fluid out from the second chamber towards the second target surface. Therefore, the first target surface may receive the fluid and the second fluid from the first outlet of the chamber and the first outlet of the second chamber. In other words, the first outlet of the chamber and the first outlet of the second chamber may be in fluid connection to the first target surface. Further, the second target surface may receive the fluid and the second fluid from the second outlet of the chamber and the second outlet of the second chamber. In other words, the second outlet of the chamber and the second outlet of the second chamber may be in fluid connection to the second target surface.

Preferably, a second through hole may be provided. It may be arranged at least partially inside the second chamber. Further, the second through hole may be provided in the plate or in a second plate. If the second plate is provided, the second plate may be connected to the operating means for at least moving the second plate, e.g. the operating means may be connected to the plate and the second plate to move them as explained below.

The cleaning system may further comprise one or more fluid dispensers adapted for ejecting or discharging fluid onto one or more target surfaces. The cleaning system may further comprise a feeding line which is fluid guiding means such as a pipe, a tube, or a hose for guiding a fluid from one or more outlets of the first and/or the second chamber into a fluid dispenser. For example, a pipe, a tube or a hose may be used for guiding the (first) fluid or the second fluid into a fluid dispenser. This is, the feeding line may be adapted for fluidly connect the outlets of the first and/or second chambers to the one or more fluid dispensers.

Preferably, a fluid dispenser may be supplied with the (first) fluid. It may be possible that the fluid dispenser is supplied also with the second fluid. Said fluid dispenser may be configured to eject the first and second fluids through the same orifice onto at least a target surface. More preferably, said fluid dispenser may be configured to eject a mixed fluid onto at least the target surface, the mixed fluid being a mix of the (first) fluid and the second fluid. More preferably, said fluid dispenser may be a mixed nozzle. It is preferred to supply the first and second fluids into said mixed nozzle. The mixed nozzle may be adapted for receiving the first and second fluids separately, e.g. not mixed, from one or more outlets of the chamber and from one or more outlets of the second chamber, and combine them so as to obtain a mixed fluid. The mixed nozzle may be further adapted for ejecting the mixed fluid at least to a target surface, e.g. the first target surface or the second target surface.

The cleaning system may be provided with at least one fluid distribution selector. The fluid distribution selector, e.g. the first fluid distribution selector, is a device that may comprise the above-mentioned chamber, e.g. the first chamber, and the plate therein. Optionally, it is possible within the meaning of the present disclosure that the cleaning system may be provided with another fluid distribution selector, e.g. a second fluid distribution selector. In this case, the second fluid distribution selector may be a device that comprises the second chamber and the second plate therein. This is, the fluid distribution selector may comprise the first chamber, wherein the second fluid distribution selector may comprise the second chamber. Therefore, the chamber and the second chamber are separate chambers one from the other arranged in different devices. Alternatively, the second chamber may be included in the first fluid distribution selector. This is, the first fluid distribution selector may comprise a sealing means, e.g. a sealing gasket, that separates (divides) its interior space into two different chambers: the chamber and the second chamber. Preferably, the above-mentioned housing of the second chamber may include said sealing means. Preferably, the chamber comprises the second chamber, or the second chamber comprises the chamber. In any case, it is preferred both chambers are watertight chambers such that the fluid and the second fluid are prevented from being in contact or mixed. In other words, the chamber and the second chamber are two independent fluid chambers, one for each cleaning fluid -for example washing liquid and pressurized gas respectively- that may be provided in one single fluid distribution selector or in two different fluid distribution selectors.

The through hole provided in the plate is configured to let the fluid to pass through thereof. The through hole, within the meaning of the present disclosure, shall not be understood necessarily as a single hole, instead, the through hole may comprise a plurality of through openings, e.g. two or more through openings. As a consequence, when an outlet of the chamber and a through opening of the through hole are arranged at least partially in fluid communication, they may define at least a flow passage for the fluid to flow out from the chamber towards one or more target surfaces.

Preferably, an outlet either from the chamber or the second chamber, e.g. the first and/or second outlet of the first and/or second chamber, may comprise a group of fluid outlets. Said group of fluid outlets may comprise two or more fluid outlets, wherein at least one of said fluid outlets is located closer to a lateral surface of the housing (described further below) than at least another of said fluid outlets. If the plate and/or the second plate rotates about an axis of rotation as explained further below, at least one of said fluid outlets is located closer to the axis of rotation than at least another of said fluid outlets. Further, the through hole may have a greater area than an area of a fluid outlet. Preferably, the through hole may have an area at least two times, more preferably three times, greater than at least one of said fluid outlets. In fact, the through hole may be bigger than the sum of the areas of two fluid outlets belonging to the group of fluid outlets. In use, the through hole may be in fluid communication with two or more fluid outlets of the group of fluid outlets at the same time, defining thereby at least two or more flow passages for the fluid to flow out from the chamber, wherein the two or more target surfaces are in fluid connection to the two or more fluid outlets. It allows the cleaning system to clean two or more target surfaces at the same time. It is even more preferred that two or more through openings of the through hole and/or the second through hole may be at least partially in fluid communication with two or more fluid outlets of the one or more outlets for defining two different flow passages, e.g. fluid connections, so as to clean two or more target surfaces at the same time. This is, a first through opening of the (first) through hole may be arranged at least partially aligned with a first fluid outlet of the first outlet defining thereby at least a flow passage for the fluid to flow out from the chamber and, at the same time, a second through opening of the (first) through hole may be arranged at least partially aligned with a second fluid outlet of the first outlet defining thereby at least a flow passage for the fluid to flow out from the chamber, wherein both flow passages are provided towards the same or different target surfaces. It may be particularly advantageous when optical contamination is detected on both the first target surface and the second target surface and it is required to remove both optical contaminations at the same time without having to prioritize cleaning one target surface before cleaning the other target surface. In this way, safety is enhanced. Through the present disclosure, two or more target surfaces may be the same target surface or different target surfaces and may belong or not to the same target object.

Preferably, the second through hole may be configured to let the second fluid to pass through thereof. As explained, the second though hole may be located in the second inner space. As a consequence, when an outlet of the second chamber and a through opening of the second through hole are at least partially in fluid communication, they may define at least a flow passage for the second fluid to flow out from the second chamber towards one or more target surfaces. Further, the second through hole may comprise one or more through openings. Therefore, within the meaning of the present disclosure, the second through hole shall not be understood necessarily as a single hole, instead, the second through hole may comprise a plurality of through openings. Other features for the (first) through hole may be applied analogously to the second through hole.

It is preferred that the cleaning system further comprises the second plate, wherein the second plate may include the second through hole. Further, the second plate may be arranged at least partially inside at least the second chamber. Additionally, the above-mentioned operating means may be further connected to the second plate. Also, the plate and the second plate are separate plates. Furthermore, the plate and/or the second plate may present any shape, for example, the plate and/or the second plate may be a disk or a ring-shaped plate or a quadrangle-shaped plate, or a rectangular-shaped plate, or a circular or round plate. In fact, the plate and/or the second plate may preferably consist of a flat thin piece of (ceramic) material provided with the above-mentioned through hole and second through hole respectively.

As explained, the plate may be arranged at least partially inside at least the first chamber. Further, the second plate, when provided, may be arranged at least partially inside at least the second chamber or second inner space. When the first and second chambers are implemented in the same fluid distribution selector, the plate may be arranged at least partially inside at least the first and second chambers. Preferably, the plate and the housing of the chamber may be arranged in close contact with each other at a common interface. Alternatively, the cleaning system may further comprise an additional plate arranged inside the chamber. The additional plate may be attached to the housing of the chamber or arranged as an integral part of the housing. In this way, the plate and the additional plate may be may be arranged in close contact with each other at a common interface. As it will be described below, in operation, the plate moves relative to the additional plate or to the housing. A grease or lubrication means may be provided between the plate and the additional plate or between the plate and the housing. Analogously, the second plate and the housing of the second chamber may be arranged in close contact with each other at a common interface. Alternatively, it is preferred that the cleaning system may further comprise a second additional plate arranged inside the second chamber. The second additional plate may be attached to the housing of the second chamber or arranged as an integral part of the housing of the second chamber. In this way the second plate and the second additional plate may be arranged in close contact with each other at a common interface. In operation, the second plate moves relative to the second additional plate when provided or to the housing of the second chamber.

The operating means may comprise a motor or an actuator. The operating means may further comprise a driving means. Preferably, the driving means may include a shaft, or a gear system, or a transmission belt. The motor or the actuator may be adapted to drive the driving means for moving at least the plate and/or the second plate if provided.

In the present disclosure "control unit configured to control the operating means" may comprise that the control unit is in electrical wired communication or in wireless communication with the operating means such that one or more signal commands may be sent by the control unit and received by the operating means such that instructions to move or stop may be sent and/or received. A washing command signal or washing command may be generated by the control unit. A washing command may be received by the control unit via any means of wired or wireless communication.

It is preferred that the cleaning system may further comprise a first fluid pressure generator and/or a second fluid pressure generator. The first fluid pressure generator may be fluidically connected to a first fluid source and configured to supply the (first) fluid to the (first) chamber through one or more inlets. More preferably, the first fluid pressure generator may be connected to a second fluid source. The second fluid pressure generator may be fluidically configured to supply the second fluid to the second chamber through one or more inlets of the second chamber. In examples, the second fluid source may be the vehicle exterior environment, e.g. air out of the vehicle.

The first and second fluids are cleaning fluids. Preferably, the first fluid may comprise washing liquid and the second fluid may comprise pressurized gas. More preferably, the first fluid may be washing liquid such as a liquid that may comprise water, a cleanser, a chemical product, or a combination thereof. The second fluid may be compressed air.

Preferably, the present cleaning system further comprises the first fluid source and/or the second fluid source. Further, the first or the second fluid pressure generators may be one or more pumps and/or one or more gas compressors. More preferably, the first fluid pressure generator may be one or more pumps. Therefore, the one or more pumps may be fluidically connected to the first fluid source and configured to supply the washing liquid to the chamber through one or more inlets. Further, the second fluid pressure generator may be one or more gas compressors, e.g. air compressors. Therefore, the one or more gas compressors may be configured to supply the pressurized gas to the second chamber through one or more inlets of the second chamber. Said one or more gas compressors may be fluidically connected to the second fluid source.

The control unit is configured, upon the washing command, to control the operating means for providing a (first) fluid communication. Thus, the fluid may be ejected or discharged onto at least a target surface in fluid connection to an outlet of the chamber, e.g. the first outlet of the chamber. Preferably, the target surface may be the first target surface. Providing the (first) fluid communication may be achieved by positioning the through hole and an outlet of the chamber, e.g. the first outlet of the chamber, in fluid communication with each other. This is, the through hole and the first outlet of the chamber may be at least partially aligned. Providing said (first) fluid communication may comprise moving the plate such that, in use, the through hole is in fluid communication with the first outlet of the chamber.

Preferably, the control unit may be further configured, upon the washing command, to control the cleaning system, for example, the operating means, for providing the second fluid communication. Thus, the second fluid may be ejected or discharged onto at least the target surface in fluid connection to an outlet of the second chamber, e.g. the first outlet of the second chamber. Preferably, the target surface may be the first target surface. It is even more preferred that providing the second fluid communication may be achieved by positioning the second through hole and an outlet of the second chamber, e.g. the first outlet of the second chamber, in fluid communication with each other. This is, the second through hole and the first outlet of the second chamber may be at least partially aligned. Providing said second fluid communication may comprise moving the plate that includes the second through hole such that, in use, the second through hole is in fluid communication with the first outlet of the second chamber. As stated above, the plate that includes the second through hole may be the (first) plate or the second plate.

Preferably, the control unit may be further configured, upon the second washing command, to control the operating means for providing a third fluid communication. Thus, the (first) fluid may be ejected or discharged onto at least the target surface in fluid connection to an outlet of the chamber, e.g. the second outlet of the first chamber. Preferably, the target surface may be the second target surface. Providing the third fluid communication may be achieved by positioning the through hole and an outlet of the chamber, e.g. the second outlet of the first chamber, in fluid communication with each other. This is, the through hole and the second outlet of the (first) chamber may be at least partially aligned. Providing said third fluid communication may comprise moving the plate such that, in use, the through hole is in fluid communication with the second outlet of the first chamber.

Preferably, the control unit may be further configured, upon the second washing command, to control the cleaning system, for example, the operating means, for providing a fourth fluid communication. Thus, the second fluid may be ejected or discharged onto at least the target surface in fluid connection to an outlet of the second chamber, e.g. the second outlet of the second chamber. Preferably, the target surface may be the second target surface. It is even more preferred that providing the fourth fluid communication may be achieved by positioning the second through hole and an outlet of the second chamber, e.g. the second outlet of the second chamber, in fluid communication with each other. This is, the second through hole and the second outlet of the second chamber may be at least partially aligned. Providing said fourth fluid communication may comprise moving the plate that includes the second through hole such that, in use, the second through hole is in fluid communication with the second outlet of the second chamber. As stated above, the plate that includes the second through hole may be the (first) plate or the second plate.

Preferably, the control unit may be further configured to provide the second fluid communication at least in an instant of time after preventing the first fluid communication within a predefined time threshold. Alternatively, the control unit may be further configured to provide the second fluid communication at least in an instant of time where the first fluid communication is provided, e.g. at least in an instant of time where both the first and the second fluid communication are provided at the same time. If both fluid communications are provided at the same time, it is even more preferred to supply the first and second fluids into a fluid dispenser, e.g. into the same fluid dispenser.

As explained, the (first) fluid communication may be provided when the though hole and an outlet of the first chamber, e.g. the first outlet of the chamber, are in fluid communication to each other. Also, the second fluid communication may be provided when the second though hole and an outlet of the second chamber, e.g. the first outlet of the second chamber, are in fluid communication with each other. Preventing the (first) fluid communication may be achieved by positioning the first through hole not in fluid communication, e.g. misaligned, with an outlet of the first chamber, e.g. the first outlet of the chamber. Further, preventing the second fluid communication may be achieved by positioning the second through hole not in fluid communication, e.g. misaligned, with an outlet of the second chamber, e.g. the first outlet of the second chamber. Further, the third fluid communication may be provided when the though hole and an outlet of the first chamber, e.g. the second outlet of the chamber, are in fluid communication to each other. The fourth fluid communication may be provided when the second though hole and an outlet of the second chamber, e.g. the second outlet of the second chamber, are in fluid communication with each other. Preventing the third fluid communication may be achieved by positioning the first through hole not in fluid communication, e.g. misaligned, with the an outlet of the first chamber, e.g. the second outlet of the chamber. Further, preventing the fourth fluid communication may be achieved by positioning the second through hole not in fluid communication, e.g. misaligned, with the an outlet of the second chamber, e.g. the second outlet of the second chamber.

The control unit may be further configured, upon the washing command, to control the cleaning system for ejecting the first and/or second fluids with a cleaning cycle including an alternating pulse. This is, the control unit may be further configured to control the operating means and/or the first fluid pressure generator and/or the second fluid pressure generator for the cleaning system to eject fluid, either the (first) fluid and/or the second fluid, to one, two, or more target surfaces at an alternating pulse. Therefore, the cleaning system may be capable of ejecting fluid at a predetermined pulse speed. It means that fluid, either the (first) fluid or the second fluid, may not have a constant pressure or speed over time, rather fluid may have alternating levels of pressure or speed over time. For example, the alternating pulse may be a transient variation in the amount of fluid propagated per unit of time. In other words, the fluid instead of being constant may be regularly interrupted, or substantially reduced in pressure or speed, over a short period of time. In short, fluid flow may be discontinuous. As stated below, the duration of said interruption or reduction in pressure or speed may be of between 0.2 seconds and 2 seconds.

The cleaning system may distribute fluid out the chamber and/or the second chamber at an alternating pulse defining thus a cleaning cycle. Preferably, the cleaning cycle may comprise:
- providing the (first) fluid communication, ON1 state, for discharging the fluid onto at least the target surface; and
- preventing the (first) fluid communication, OFF1 state.

Preferably, the cleaning cycle further comprises a repetition of the above, e.g. ON1-OFF1 states, at least N times within a predetermined repetition time threshold, N being two or more times. For example, the fluid communication is provided at an alternating pulse of ON1-OFF1-ON1-OFF1.

The cleaning cycle may further comprise:
- providing a second fluid communication, ON2 state, for discharging the second fluid onto at least the target surface at least in an instant of time after preventing the fluid communication, the second fluid communication being provided within a predefined time threshold; and
- preventing the second fluid communication, OFF2 state, preferably by moving the second through hole such that, in use, the second through hole and the outlet of the second chamber are not in fluid communication with each other.

Preferably, the cleaning cycle further comprises a repetition of the above, e.g. ON2-OFF2 states, at least N times within a predetermined repetition time threshold, N being two or more times. For example, the second fluid communication is provided at an alternating pulse of ON2-OFF2-ON2-OFF2. More preferably, the control unit may be further configured to control the cleaning system for ejecting the first and second fluids at an alternating pulse of, for example, ON1-OFF1-ON2-OFF2-ON1-OFF1-ON2-OFF2. It may be still possible ON1-OFF1--ON1-OFF1-ON2-OFF2.

The predefined time threshold is shorter than the predetermined repetition time threshold. Further, the predetermined repetition time threshold may have a duration of between 0.1 and 2 seconds. Also, the predefined time threshold may have a duration of less than 0.5 seconds. Said predefined time threshold may be counted from when the (first) fluid communication is prevented. Both the predetermined repetition time threshold and the predefined time threshold may be saved in the control unit.

In use, the second fluid may provide greater speed to the (first) fluid towards the one or more target surfaces. This is, the pressure of the first fluid in the first fluid communication is lower than the second fluid in the second fluid communication such that, in use, the second fluid provides greater speed to the (first) fluid towards a target surface. Thus, cleaning is more effective.

As stated above, the second fluid may be pressurized gas, e.g. compressed air. Preferably, the second fluid may have a pressure greater than a pressure of the (first) fluid. It is even more preferred that the second fluid has at least two bars of pressure more than the (first) fluid. More preferably, the second fluid for the second fluid communication may have a higher speed when flowed out the chamber towards the fluid dispenser than the (first) fluid in the first fluid communication when flowed out the chamber towards said fluid dispenser such that, in use, the pressurized gas may come into contact with the washing liquid so the speed of the washing liquid is advantageously increased. Therefore, the pressurized gas, coming at a higher speed than the washing liquid, may "push" the washing liquid causing the washing liquid to acquire a higher (exit) speed towards one or more target surfaces. In other words, the speed of the washing liquid may be higher when ejected by the fluid dispenser than before being "hit from behind" by the blast of pressurized gas. In short, the cleaning system may eject drops or predefined volumes of washing liquid (so called "liquid bullets") provided with increased discharge speed due to the pressurized gas achieving a so called "machine gun" concept. Therefore, the present invention achieves an increased efficiency in removing both the first fluid, e.g. drying the washing liquid, and optical contamination from a target surface by the use of the subsequent second fluid, e.g. pressurized gas.

In an example that the second fluid is not used for causing greater speed to the (first) fluid, it is still possible within the meaning of the present disclosure that the pressurized gas may still blow the washing liquid disposed on a target surface at least in the instant of time after the washing liquid is prevented within a predefined time threshold. In this case, the purpose of the second fluid is to remove, e.g. dry, the first fluid from one or more target surfaces.

The control unit may include a memory for storing a position of the through hole relative to the position of one or more outlets of the chamber and, optionally, of the second chamber. Preferably, a position of each through opening of the through hole relative to the position of the first and second outlets of the chamber and, optionally, the first and second outlets of the second chamber. Furthermore, the position of the each through opening of the through hole relative to the group of fluid outlets of the above-mentioned outlets may also be saved in the control unit. It is more preferred that a relationship between the outlets of the chamber, e.g. the first and second outlets, and the associated target surfaces to be cleaned, e.g. the first and second target surfaces respectively, may be saved in the control unit. In use, the control unit may be configured to control the operating means, upon the first washing command or the second washing command, for moving the first plate to at least a position indicated by the memory. Thus, positions of the plate for the different plate movements may be controlled by the control unit. Therefore, when the first target surface has to be cleaned, the control unit may be configured to operate the operating means, upon the first washing command, for moving the (first) plate for the through hole to be positioned in fluid communication to the first outlet or selected outlet, the position of the first outlet being pre-saved in the control unit. When the second target surface has to be cleaned, the control unit may be configured to operate the operating means, upon the second washing command, for moving the (first) plate for the through hole to be positioned in fluid communication to the second outlet of the chamber or selected outlet, the position of the second outlet being pre-saved in the control unit.

Further, the memory of the control unit may be configured for storing positions of the second through hole relative to positions of at least one or more outlets of the second chamber e.g. the first and second outlets of the second chamber such that the control unit may be configured to control the operating means, upon the second washing command, for moving the plate that includes the second through hole to at least a position indicated by the memory. Therefore, when the second fluid needs to be ejected to clean or dry the first or the second target surface, the control unit may be configured to control the operating means, upon the first and/or second washing command, for moving the plate that includes the second through hole for the second through hole to be positioned in fluid communication with the first outlet of the second chamber for cleaning the first target surface or with the second outlet of the second chamber for cleaning the second target surface, the position of the first and second outlets of the second chamber being pre-saved in the control unit. If, for example, the target surface needs to be cleaned, upon the first washing command, the control unit may read the memory to control the operating means to a position indicated by the memory, so that the combination of through opening(s) and fluid outlet(s) defines at least a flow passage towards any one or more surfaces of the first target surface. In these examples, the memory advantageously stores how the plate would need to be moved. If, for example, the first plate is a disk, the movement may comprise steering the disk a particular number of degrees in a clockwise or anticlockwise direction. If, for example, the first plate is a quadrangular plate, the movement may comprise displacing the plate a first distance in a first direction and/or a second distance in a second direction. In some examples, the cleaning system may further include a sensor for sensing the position of the first plate relative to at least one of an outlet of the chamber. In short, when the control unit receives or generates a washing command, the control unit is configured to determine the selected outlet(s) to make the operating means to move the plate for aligning the through hole and the selected outlet(s) so as to provide a fluid communication and thus creating a desired flow passage for ejecting the fluid onto the target surface to be cleaned according to the washing command.

The first outlet of the chamber and the second outlet of the chamber are angularly displaced from each other with respect to the axis of rotation of the plate, e.g. disk. Further outlets may be provided. For example, a third outlet or even a four or more outlets may be provided. Preferably, the second outlet may be angularly arranged therebetween the first and the third outlet of the chamber. As explained, the plate may be moved, e.g. rotated about the axis of rotation, for providing the alignment between the through hole and the different outlets as required. This is, the plate may be moved to a number of positions. A first position of the plate is when the through hole and the first outlet of the chamber are substantially aligned to each other. Further, a second position of the plate is when the through hole and the second outlet of the chamber are substantially aligned to each other. Also, a third position of the plate is when the through hole and the third outlet of the chamber are substantially aligned to each other. Furthermore, a fourth position of the plate is when the through hole and the fourth outlet of the chamber are substantially aligned to each other. The second position of the plate may be angularly displaced therebetween the first and the third position. This is, in an example, the second position is an intermediate position when the plate is moved from the first position to the third position or vice versa. Therefore, when the plate moves from the first position to the third position or selected position, the plate may inevitably pass through the intermediate second position, so there may exist a moment when the second outlet may be in fluid communication with the through hole, so that the fluid may flow out from the chamber, which may result in undesirable loss of fluid. To avoid the loss of fluid when the through hole is in the intermediate position, the present disclosure provides different solutions as explained in the following paragraphs.

In examples, where three positions are provided, a change in the sense of the movement or rotation in another direction of the plate may solve the aforementioned drawback. If four or more positions are provided, then the change in direction or sense of movement may not solve the aforementioned drawback.

To solve the aforementioned drawback, the control unit may be configured to control the operating means such that, in use, the plate may not be moved until the (first) chamber is free of (first) fluid. This is, the plate may be moved, upon the (first) washing command, when there is no (first) fluid in the (first) chamber. The control unit may be further configured to control the operating means to move the plate when the fluid is not entering into the chamber. In other words, the control unit may be configured to control the plate movement when the fluid is not entering into the chamber. The fluid is not entering into the chamber when:
- the (first) fluid pressure generator is not activated;
- a first control valve in fluid communication with the first inlet is provided as stated below;
- a fluid communication between the through hole and an outlet of the chamber is prevented. It may be because the plate is moved quick enough to avoid the pass of fluid through an outlet of the chamber, or because the through hole and an outlet of the chamber are not in fluid communication.

The present cleaning system may preferably comprise the first control valve arranged between the first fluid pressure generator and the chamber, including at the first fluid pressure generator and at the chamber. Preferably, the first control valve may be arranged in fluid connection with the first inlet of the chamber. The control unit may be configured to operate the control valve such that, in use, the control valve allows and/or prevents a flow of (first) fluid from entering into the chamber. Allowing the flow of fluid into the chamber may comprise letting a fluid enter into a chamber of the fluid dispensing system. Preventing the flow of fluid into the chamber may comprise stopping the fluid from entering into the chamber. The aforementioned drawbacks related to the loss of fluid from flowing when the plate is in an intermediate position between the position one and a selected position may be solved with the control valve, which may comprise an electro-valve or a solenoid valve.

The present cleaning system may be a cleaning system for a (motor) vehicle. It may be the type of a fluid dispensing system, in particular, for cleaning a target surface, preferably, two or more target surfaces. For example, a vehicle cleaning system for cleaning parts such as optical sensors or protective covers thereof. The target surface, e.g. the first target surface, may be a surface or part of a surface of a target object to be cleaned. The target surface may be, for example, a sensor of a vehicle or a part thereof such as a protective cover of an optical device. The sensor of a vehicle may be, for example, an image acquisition unit, such as a camera arrangement, a radar, a lidar, or the like.

According to an aspect of the present invention a method for operating a cleaning system is further provided. The method comprises:
- generating or receiving, by a control unit, a washing command;
- preferably, operating a fluid pressure generator for supplying a fluid towards a chamber;
- preferably, preventing the fluid from entering into an inner space of the chamber;
- providing a fluid communication between a through hole and a first outlet of the chamber by moving a plate that includes the through hole;
- preferably, allowing the fluid to enter into the inner space of the chamber; discharging the fluid onto at least a target surface to be cleaned in fluid connection to the first outlet of the chamber; and preferably, stopping operating the fluid pressure generator or preventing the fluid from entering into the inner space of the chamber after discharging the fluid onto at least the target surface.

The method may further comprise:
- preferably, operating a second fluid pressure generator for supplying a second fluid towards a second chamber;
- preferably, preventing the second fluid from entering into an inner space of the second chamber;
- providing a second fluid communication, for example, moving a plate arranged in the inner space that includes a second through hole for aligning the second through hole and a first outlet of the second chamber;
- preferably, allowing the second fluid to enter into the inner space of the chamber;
- discharging the second fluid onto at least the target surface to be cleaned in fluid connection to the first outlet of the second chamber and the first outlet of the chamber; and
- preferably, stopping operating the second fluid pressure generator or preventing the second fluid from entering into the inner space of the second chamber after discharging the second fluid onto at least the target surface.

The method may further comprise:
- generating or receiving, by a control unit, a second washing command;
- providing a third fluid communication between the through hole and a second outlet of the chamber by moving the plate that includes the through hole;
- discharging the fluid onto at least a second target surface to be cleaned in fluid connection to the second outlet of the chamber;
- preferably, preventing the fluid from entering into the inner space of the chamber after discharging the fluid onto at least the second target surface;
- providing a fourth fluid communication, for example, moving the plate arranged in the inner space that includes the second through hole for aligning the second through hole and a second outlet of the second chamber;
- discharging the second fluid onto at least the second target surface to be cleaned in fluid connection to the second outlet of the second chamber and the second outlet of the chamber; and
- preferably, preventing the second fluid from entering into the inner space of the second chamber after discharging the second fluid onto at least the second target surface.

The method may further comprise discharging the first and/or second fluids onto at least the target surface at an alternating pulse.

Preferably, the method may further comprise:
- providing the first fluid communication;
- preventing the fluid communication;
- providing a second fluid communication at least in an instant of time after preventing the first fluid communication, the second fluid communication being provided within a predefined time threshold; and
- preferably, preventing the second fluid communication.

The steps of providing or preventing said fluid communications may comprise moving the through hole and the second through hole as stated above.

For reasons of completeness the following clauses are proposed:
Clause 1. A cleaning system comprising:
   - a first chamber (101) including one or more inlets (102) for supplying a first fluid (f1) into the chamber (101), and one or more outlets (103) for distributing a first fluid (f1) out from the first chamber (101) towards one or more target surfaces (600) to be cleaned;
   - a second chamber (201) including one or more inlets (202) for supplying a second fluid (f2) into the second chamber (201), and one or more outlets (203) for distributing the second fluid (f2) out from the second chamber (201) towards one or more target surfaces (600) to be cleaned; and
   - a control unit (ECU), upon a washing command, being configured to control the cleaning system for ejecting the first and second fluids (f1, f2) onto one or more target surfaces (600), wherein at least the first fluid (f1) is ejected with a cleaning cycle including an alternating pulse.

Clause 2. The cleaning system of clause 1, wherein the cleaning cycle comprises:
- providing a first fluid communication (108-1), ON1 state, for discharging the first fluid (f1) onto at least a first target surface (601) in fluid connection to at least one outlet (103-1) of the chamber (101); and
- preventing the fluid communication (108-1), OFF1 state,
wherein the cleaning cycle further comprises a repetition of the above at least N times within a predetermined repetition time threshold, N being two or more times.

Clause 3. The cleaning system of any preceding clause, wherein the second fluid (f2) is also ejected at an alternating pulse.

Clause 4. The cleaning system of clauses 2 or 3, wherein the cleaning cycle further comprises:
- providing a second fluid communication (208-2), ON2 state, for discharging the second fluid (f2) onto at least the target surface (601) in fluid connection to at least one outlet (203-1) of the second chamber at least in an instant of time after preventing the first fluid communication (108-1), the second fluid communication (208-2) being provided within a predefined time threshold; and
- optionally, preventing the second fluid communication (208-2), OFF2 state,
wherein the cleaning cycle further comprises a repetition of the above at least N times within a predetermined repetition time threshold, N being two or more times.

Clause 5. The cleaning system of clause 4, wherein the predefined time threshold is shorter than the predetermined repetition time threshold.

Clause 6. The cleaning system of any clause 4-5, wherein the predetermined repetition time threshold has a duration of between 0.1 and 2 seconds.

Clause 7. The cleaning system of any clause 4-6, wherein the predefined time threshold has a duration of less than 0.5 seconds.

Clause 8. The cleaning system of any clause 2-7, wherein the amount of fluid ejected during the ON1 state may be of between 0.05 and 15 cm3, preferably, between 0.1 and 10 cm3, more preferably, 0.2 and 5 cm3.

Clause 9. The cleaning system of any preceding clause, wherein the at least one outlet (103-1) of the chamber and the at least one outlet (203-1) of the second chamber (201) are in fluid connection to each other.

Clause 10. The cleaning system of any preceding clause, wherein it further comprises a fluid dispenser being supplied with the first fluid (f1) and the second fluid (f2) and is configured to eject the first and second fluids (f1, f2) through the same orifice.

Clause 11. The cleaning system of any preceding clause, wherein the fluid dispenser is a mixed nozzle fluidly connected to the at least one outlet (103-1) of the chamber and the at least one outlet (203-1) of the second chamber (201), wherein, in use, the mixed nozzle is configured to eject a mixed fluid onto at least the first target object (601).

Clause 12. The cleaning system of any preceding clause, wherein it further comprises an operating means (300), wherein the control unit (ECU) is further configured to control the operating means (300) for ejecting at least the first fluid (f1) onto one or more target surfaces (600) with the cleaning cycle including the alternating pulse.

Clause 13. The cleaning system of any preceding clause, wherein the operating means (300) is connected at least to a plate (104) that includes a through hole (105), wherein providing the first fluid communication (108-1) comprises moving the plate (104) for the through hole (105) and the at least one outlet (103-1) of the first chamber being in fluid communication, defining thereby at least a flow passage for the first fluid (f1) to flow out from the first chamber (101) through the at least one outlet (103-1) of the first chamber towards at least the first target surface (601), wherein the control unit (ECU) is configured to control the operating means (300) for
- providing the first fluid communication (108-1), ON1 state, between the through hole (105) and the at least one outlet (103-1) of the first chamber; and
- preventing the first fluid communication (108-1), OFF1 state, between the through hole (105) and the at least one outlet (103-1) of the first chamber.

Clause 14. The cleaning system of any preceding clause, wherein the operating means (300) is further adapted for moving a second through hole (205) such that, in use, the second through hole (205) and the at least one outlet (203-1) of the second chamber are in fluid communication, wherein the control unit (ECU) is further configured to control the operating means (300) for
- providing the second fluid communication (208-2), ON2 state, between the second through hole (205) and the at least one outlet (203-1) of the second chamber; and
- preventing the second fluid communication (208-2), OFF2 state, between the second through hole (205) and the at least one outlet (203-1) of the second chamber.

Clause 15. A method of cleaning comprising:
- supplying a first fluid (f1) into a chamber (101) in fluid connection to one or more target surfaces (600) to be cleaned;
- supplying a second fluid (f2) into a second chamber (201) in fluid connection to one or two or more target surfaces (600) to be cleaned;
- receiving or generating a washing command; and
- ejecting the first and second fluids (f1, f2) onto the one or more target surfaces (600), wherein at least the first fluid (f1) is ejected with a cleaning cycle including an alternating pulse, preferably, the second fluid(f2) is also ejected at an alternating pulse.

### BRIEF DESCRIPTION OF THE DRAWINGS

Non-limiting examples of the present disclosure will be described in the following, with reference to the appended drawings, in which:
Figure 1 schematically illustrates an example of a cleaning system for a vehicle for removing optical contaminations from two or more target surfaces.
Figures 2A, 2B and 2C are schematic views that show three examples of fluid dispensers for ejecting the first and the second fluid to one or more target surfaces to be cleaned.
Figure 3 is an exploded view of a fluid distribution selector.
Figure 4 is a cross-section view of a fluid distribution selector.
Figure 5A is a schematic cross-section view of a cleaning system comprising a first fluid distribution selector and a second fluid distribution selector.
Figure 5B is a schematic cross-section view of a cleaning system comprising a first fluid distribution selector comprising a first chamber and a second chamber.
Figure 6 is a rear view of an example of a plate and a portion of the front surface of the housing of the first chamber.
Figure 7A is a schematic illustration of an example of a disk-shaped plate on a portion of a housing of the first chamber. In particular, figure 7A illustrates the position of the through openings relative to the fluid outlets of the chamber for providing a fluid communication.
Figure 7B is a schematic illustration of an example of the disk-shaped plate on the portion of the housing of the first chamber when the disk-shaped plate has been rotated or moved. In particular, figure 7B illustrates the position of the through openings relative to the fluid outlets of the chamber for preventing the fluid communication. More in particular, the disk-shaped plate is arranged in a non-cleaning position NCP.
Figure 8 is a rear view of an example of a fluid distribution selector.
Figure 9 is a schematic illustration of the first and second fluid distribution selectors, wherein the first plate of the first fluid distribution selector and the second plate of the second fluid distribution selector move in tandem as an example of what is referred to as the "machine gun" concept throughout the present disclosure.
Figures 10A, 10B, 10C are fluid diagrams showing three different possibilities for providing and preventing first and second fluid communications.

### DETAILED DESCRIPTION OF EXAMPLES

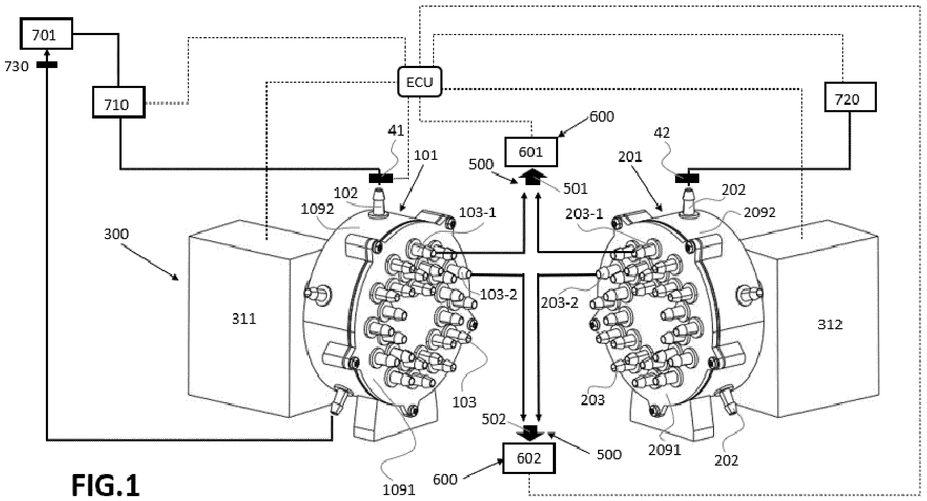

Figure 1 shows a cleaning system that comprises a first chamber 101, a second chamber 201, an operating means 300, and a control unit ECU.

The first chamber 101 is adapted for receiving a first fluid f1. The first fluid f1 is washing liquid. The first chamber 101 comprises an inlet 102 for the supply of the first fluid f1 into the first chamber 101. As shown, a plurality of inlets 102 of the first chamber are provided, for example, on the lateral surface 1092 of the housing of the first chamber. The lateral surface 1092 joins the front and back surfaces 1091 1093 of the first chamber. Alternatively, one or more of the plurality of inlets 102 may be provided on the back surface 1093 according to an example not shown. The first chamber 101 also comprises a plurality of outlets 103 for distributing the first fluid f1 out from the first chamber 101 towards one or more target surfaces 600. In particular, the plurality of outlets 103 of the first chamber comprises, in turn, a first outlet 103-1 and a second outlet 103-2 for distributing the first fluid f1 out from the first chamber 101, for example, towards the first and second target surfaces 601, 602 respectively. As shown, the second target surface 602 may be different from the first target surface 601. In examples, the plurality of outlets 103 of the first chamber such as the first and second outlets 103-1, 103-2 are provided on the front surface 1091 of the housing.

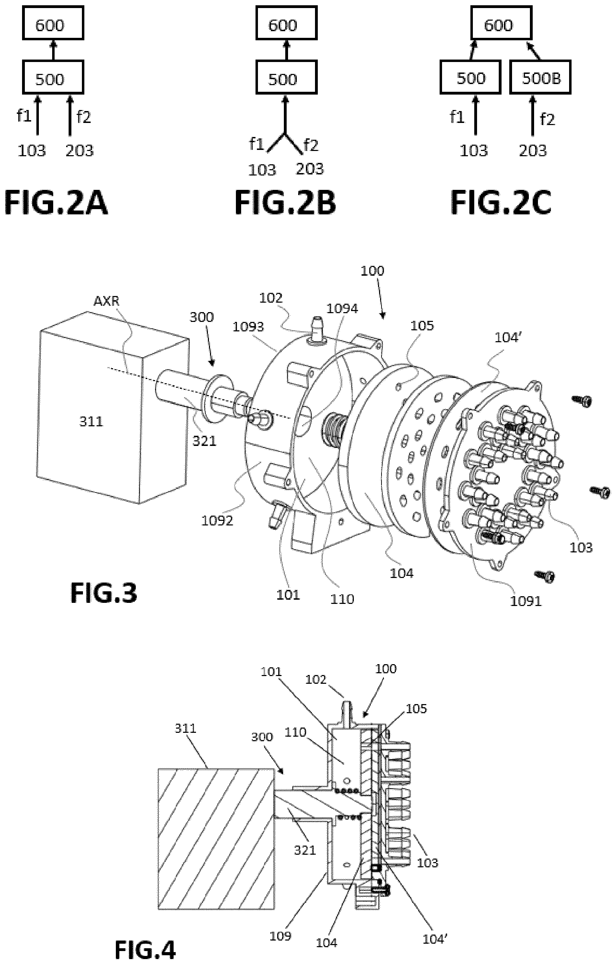

The cleaning system is provided with a first plate 104 arranged at least partially inside at least the first chamber 101 (see figures 3, 4, 5A and 5B). The first plate 104 includes a first through hole 105. The first through hole 105 may comprise, in turn, a plurality of through openings 105A, 105B, 105C as explained further below.

The second chamber 201 is adapted for receiving a second fluid f2. The second fluid f2 is pressurized gas, e.g. compressed air. The second chamber 201 comprises an inlet 202 for the supply of the second fluid f2 into the second chamber 201. As shown, a plurality of inlets 202 of the second chamber are provided, for example, on the lateral surface 2092 of the housing of the second chamber 201. The lateral surface 2092 joins the front 2091 and back surfaces of the second chamber 201. The second chamber 201 also comprises a first outlet 203-1 and a second 203-2 for distributing the second fluid f2 out from the second chamber 201, for example, towards different target surfaces 601, 602 respectively. In examples, the plurality of outlets 203 of the second chamber such as the first and second outlets 203-1, 203-2 of the second chamber are provided on the front surface 2091 of the second chamber.

Figure 1 shows the first target surface 601 is in fluid connection to the first outlet 103-1 of the first chamber and the first outlet 203-1 of the second chamber. Further, the second target surface 602 is in fluid connection to the second outlet 103-2 of the first chamber, and the second outlet 203-2 of the second chamber.

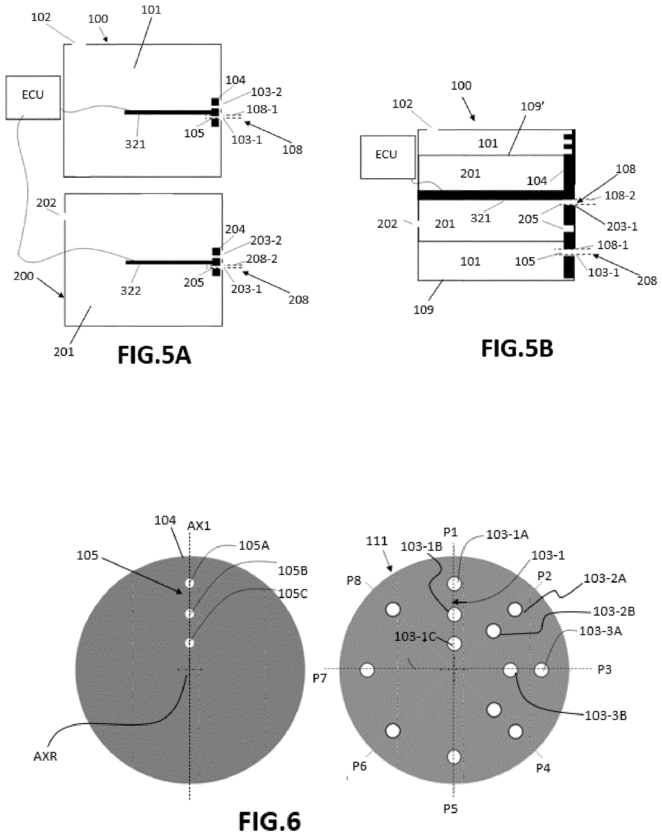

According to the example of figure 1, the cleaning system is provided with a second plate 204 arranged at least partially inside at least the second chamber 201 (see figure 5A). The second plate 204 includes, in turn, a second through hole 205. The second through hole 205 may comprise a plurality of through openings 205A, 205B, 205C as explained further below.

The operating means 300 comprises a first motor 311 or first actuator, and a second motor 312 or second actuator. Further, the operating means 300 is connected to the first plate 104 and to the second plate 204. In particular, the operating means 300 comprises a first driving means 321 adapted for moving the first plate 104 (see figures 5A and 5B). The first driving means 321 includes a shaft, or alternatively a gear system (not shown), or a transmission belt (not shown). More in particular, the operating means 300 comprises a second driving means 322 adapted for moving the second plate 204 (see figure 5A). The second driving means 322 includes a shaft, or alternatively a gear system (not shown), or a transmission belt (not shown).

Figure 1 shows two fluid distribution selectors, e.g. a first distribution selector and a second distribution selector, connected to the control unit ECU. The first distribution selector comprises the first motor 311, the first chamber 101, and the first plate 104 therein. Further, the second distribution selector comprises the second motor 312, the second chamber 201, and the second plate 204 therein.

Figure 1 further shows that the cleaning system comprises a first fluid pressure generator 710 that is configured to supply the first fluid f1 to the first chamber 101 through at least the inlet 102 of the first chamber. Further, the first fluid pressure generator 710 is fluidically connected to a fluid source 701 such as a tank. The cleaning system further comprises a second fluid pressure generator 720 that is configured to supply the second fluid f2 to the second chamber 201 through at least the inlet 202 of the second chamber. The second fluid pressure generator 720 may be fluidically connected to a second fluid source (not shown). In examples, the second fluid source may be the vehicle exterior environment.

Figure 1 schematically illustrate that the cleaning system further comprises a fluid dispenser 500 configured to eject fluid to one or more target surfaces 600. As shown, the fluid dispenser 500 associated to the first target surface 601 is the first fluid dispenser 501. Also, the fluid dispenser 500 associated to the second target surface 602 is the second fluid dispenser 502. Further, the cleaning system further comprises a feeding line such a tube, a pipe, or a hose for fluidly connecting outlets of a chamber to a fluid dispenser 500. In particular, a pipe fluidly connects the first outlet 103-1 of the first chamber and the first fluid dispenser 501 to each other. Also, a pipe fluidly connects the first outlet 203-1 of the second chamber and the first fluid dispenser 501 to each other. More in particular, a pipe fluidly connects the second outlet 103-2 of the first chamber and the second fluid dispenser 502 to each other. Also, a pipe fluidly connects the second outlet 203-2 of the second chamber and the second fluid dispenser 502 to each other.

Figure 2A schematically illustrates a fluid dispenser 500 being supplied with the first fluid f1 and the second fluid f2 and is adapted for ejecting the first and second fluids f1, f2 through the same orifice onto one or more target surfaces 600. In particular, the first and second fluids f1, f2 are not mixed when supplied to the fluid dispenser 500. Said fluid dispenser 500 is, in particular, a mixed nozzle. The mixed nozzle is particularly adapted for mixing therein the first and second fluids f1, f2 and ejecting the mixed fluid onto one or more target surfaces 600, e.g. the first target surface 601 and/or the second target surface 602.

Figure 2B schematically illustrates a fluid dispenser 500 being supplied with the first fluid f1 and the second fluid f2 and is adapted for ejecting the first and second fluids f1, f2 through the same orifice onto one or more target surfaces 600. In particular, the feeding line receives the first and second fluids f1, f2 which are mixed. The feeding line supplies the mixed fluid into the fluid dispenser 500. Therefore, the fluid dispenser 500 is adapted for receiving the mixed fluid and ejecting it onto one or more target surfaces 600, e.g. the first target surface 601 and/or the second target surface 602.

Figure 2C schematically illustrates a fluid dispenser 500 and an additional fluid dispenser 500B. The fluid dispenser 500 is supplied with the first fluid f1 and ejects the first fluid f1 onto one or more target surfaces 600. Further, the additional fluid dispenser 500B is supplied with the second fluid f2 and ejects the second fluid f2 onto the one or more target surfaces 600. The one or more target surfaces 600 may be the first target surface 601 and/or the second target surface 602.

Figures 3 and 4 show the first motor 311 is directly connected to the first driving means 321 which is a shaft member. The first chamber 101 comprises the housing 109 defining the inner space 110. The plurality of inlets 102 is arranged on the lateral surface 1092 of the housing. The lateral surface is curved. The first plate 104 which comprises the first through hole 105 is arranged in the inner space 110 of the first chamber. As shown, a first additional plate 104' is further provided in the inner space 110 of the first chamber. In particular, the first plate 104 and the first additional plate 104' are disks or comprise a disk shape. In operation, the first plate 104 moves relative to the additional plate 104' that may be fixed, for example, to the inner surface of the front surface 1091 of the housing. In particular, the first pate 104 rotates about the axis of rotation AXR. Furthermore, the back surface 1093 comprises an aperture 1094. The first driving means 321 is arranged through said aperture 1094.

Figure 5A shows the operating means 300 comprises a driving means and a motor or an actuator. The motor may be an electric motor. The motor or the actuator may be adapted to drive the operating means 300 for moving the first plate 104 and/or the second plate 204 as required. When the second chamber 201 is provided, the driving means comprises, in turn, a first driving means 321 and a second driving means 322. As stated above, the first plate 104 is moved relative to the housing 109 or relative to the first fluid outlet 103-1. In particular, when the first additional plate 104' is provided, the first plate 104 is moved relative to the housing 109 and the first additional plate 104'. When the second plate 204 is provided, the second plate 204 is moved relative to the one or more outlet 203 of the second chamber. More in particular, when the second additional plate is provided, the second plate 204 is moved relative to the housing of the second chamber and the second additional plate.

Figure 5A shows the operating means 300 is at least partially arranged in the first chamber 101. For example, the first driving means 321 is represented as a shaft configured to rotate, rotating thereby the first plate 104. In such a case, the first driving means 321 is partially arranged in the first chamber 101 and partially arranged outside the first chamber 101 (not shown). The driving means, e.g. the first driving means 321, comprises a first end and a second end. The first end is arranged outside a housing 109 of the first chamber and the second end is arranged inside said housing 109. Further, the first end may be connected to the motor 311 or actuator, and the second end is fixed to at least one of the first additional plate 104' and the housing 109, e.g. to the portion 111. The driving means, e.g. the first driving means 321, may be part of or attached to the first plate 104. According to the example of figure 5A, the first driving means 321 is arranged substantially parallel to the flow passage 108. These features for the first driving means 321 may also be applied analogously to the second driving means 322 as shown schematically in figures 5A.

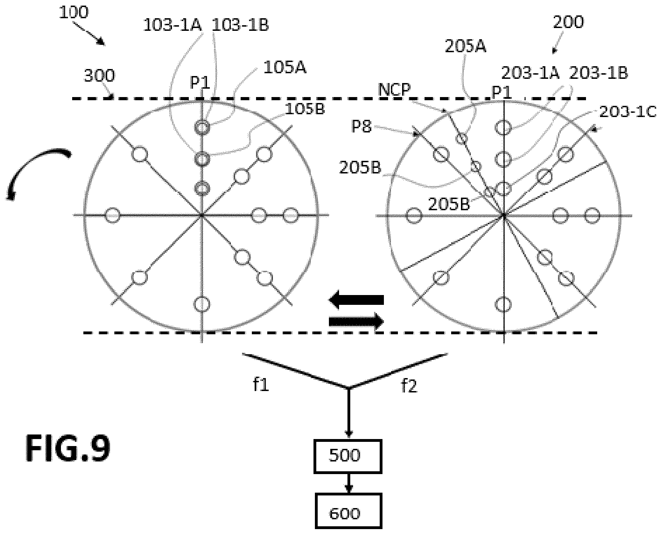

In other examples not shown, the operating means 300 may be totally arranged outside the first chamber 104. For example, the operating means 300 may comprise a gear drive mechanism such as a sprocket and belt, or toothed wheel and belt, wherein the wheel and the belt may be arranged outside the first chamber 101, and the first plate 104 may be arranged partially outside the first chamber 101 (see figure 9). A first side of the belt may be arranged around the first plate 104 and a second side of the belt may be arranged around the toothed wheel such that, in operation, the first plate 104 rotates when the wheel rotates. In some examples not shown, the gear drive mechanism may be arranged inside the first chamber 101. In order to avoid corrosion due to the contact of a fluid with the gear drive mechanism, it is preferred to arrange the gear drive mechanism outside the first chamber 101. The gear drive mechanism may engage the first plate 104. The gear drive mechanism may extend in a direction perpendicular to the fluid when flowing out the chamber, e.g. perpendicular to the flow passage 108. The gear drive mechanism may be configured to rotate about an axis of rotation that may be arranged substantially parallel to the fluid when flowing out the first inner space, e.g. parallel to the flow passage 108.

Figure 5B schematically illustrates a side view of an example of the cleaning system comprising a fluid distribution selector 100 provided with the first chamber 101 and the second chamber 201. The second chamber 201 is represented comprised within the first chamber 101, and both chambers 101, 201 may adopt any shape. The second chamber 201 is represented as comprising a smaller volume than the first chamber 101 in the figure 5B but other examples may be possible. As shown, the fluid distribution selector 100 comprises a sealing component 109' inside the housing 109 dividing the inner space 110 in two compartments, thereby providing the first chamber 101 isolated watertight from a second (inner) chamber 201. The first chamber 101 and the second chamber 201 are independent fluid chambers. The operation explained elsewhere may be applied to this example of figure 5B.

Figure 6 shows a rear view of an example of the first plate 104 (left drawing) and a portion 111 of the front housing 1091 of the first chamber (right drawing). Said portion 111 may correspond also to the first additional plate 104'. The first plate 104 is a disk. It is adapted to be rotated about the axis of rotation AXR. This is, the operating means 300 causes a rotational movement of the first plate 104 on the axis of rotation AXR. In this way, the first fluid f1 is distributed towards one or more target surfaces 600 on radial circumference to the axis of rotation AXR. The portion 111 also comprises a disk shape. The diameter of the portion 111 is substantially the same or slightly greater than the diameter of the first plate 104. The axis of rotation AXR is arranged through the center of the first plate 104 and the center of the portion 111. The portion 111 comprises the first outlet 103-1, the second outlet 103-2, a third outlet 103-3 and further outlets arranged angularly displaced with each other with respect to the axis of rotation AXR. As shown in figure 6, the first outlet 103-1 is arranged at a first position P1, the second outlet 103-2 is arranged at a second position P2, and the third outlet 103-3 is arranged at a third position P3.

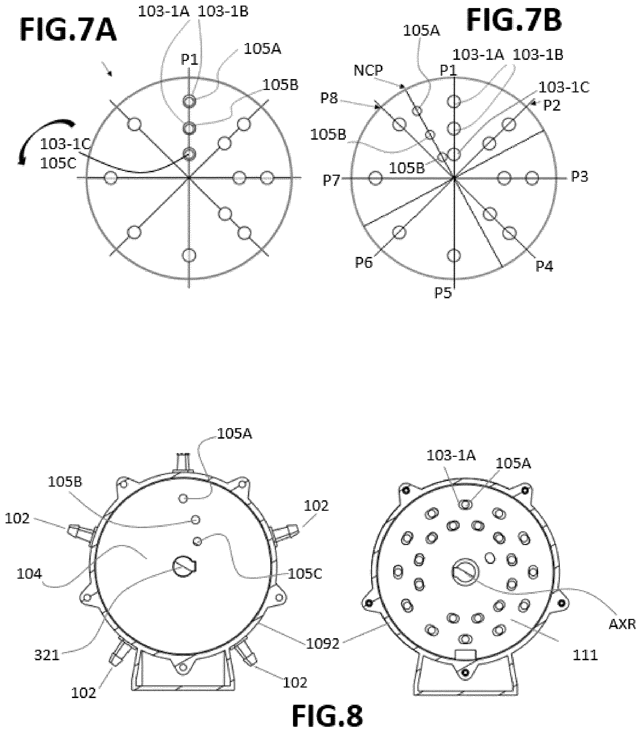

As shown, one or more of said first, second, third, and further outlets 103-1, 103-2, 103-3 comprises, in turn, a plurality of fluid outlets. For example, the first outlet 103-1 includes a group of fluid outlets 103-1A, 103-1B, 103-1C. Said group of fluid outlets of the first outlet 103-1 comprises, in particular, a first fluid outlet 103-1A, a second fluid outlet 103-1B, and a third fluid outlet 103-1C. As shown, the third fluid outlet 103-1C is closer to the center, e.g. axis of rotation AXR, than the second fluid outlet 103-1B. Further, the second fluid outlet 103-1B is closer to the center than the first fluid outlet 103-1A. This is, the first fluid outlet 103-1A is arranged further away from the center than the second fluid outlet 103-1B. Further, the second fluid outlet 103-1B is arranged further away from the center than the third fluid outlet 103-1C. Particularly, each group of fluid outlets may be arranged in lines along diametral axes although it is not essential (see figure 8).

In particular, figure 6 shows a group of fluid outlets 103-1A, 103-1B, 103-1C of the first outlet 103-1 that is arranged along a first diametral axis of the portion 111 also referred to first (angular) position P1, wherein a group of fluid outlets 103-2A, 103-2B of the second outlet 103-2 is arranged along a second diametral axis also referred to second (angular) position P2. Furthermore, a group of fluid outlets 103-3A, 103-3B of the third outlet 103-3 is arranged along a third diametral axis also referred to third (angular) position P3.

In use, the control unit ECU is configured to control the operating means 300, upon a washing command, for moving the first plate 104, or rotating in the case of disk-shaped plate, until at least one of the one or more through openings 105A, 105B, 105C of the first through hole 105 arranged in the plate 104 is/are at least partially in fluid communication with the one or more of the fluid outlets 103-1A, 103-1B, 103-1C of the first outlet 103-1, defining thereby flow passages for the first fluid f1 to flow out from the first chamber 101 towards the first and/or second target surfaces 601, 602 as required.

In use, the first through hole 105 is in fluid communication with two or more fluid outlets 103-1A, 103-1B, 103-1C of the first outlet 103-1 at the same time according to a washing command, e.g. the first washing command. Similarly, the first through hole 105 may be in fluid communication with two or more fluid outlets 103-2A, 103-2B of the second outlet 103-2 at the same time according to another washing command, e.g. the second washing command. In any case, each fluid outlet provides a flow passage when at least partially aligned with the first through hole 105. Thus, the first outlet 103-1, when comprises two or more fluid outlets 103-1A, 103-1B, 103-1C, provides two or more flow passages. Further, each fluid outlet may be fluidly connected to different target surfaces 601, 602. It allows the cleaning system to clean two or more target surfaces 601, 602 at the same time for the same (angular) position P1, P2, P3. In other words, as shown in figure 7A, three flow passages are provided for the first (angular) position P1 through the alignment of the through opening 105A and the first fluid outlet 103-1A, the through opening 105B and the second fluid outlet 103-1B, and the through opening 105C and the third fluid outlet 103-1C respectively. Analogously, two flow passages are provided for the second (angular) position P2 through the alignment of the through opening 105A and the first fluid outlet 103-2A, and the through opening 105B and the second fluid outlet 103-2B respectively (not shown).

In the example of figure 6, the first (angular) position of the plate 104 provides the first fluid communication 108-1 since each fluid outlet 103-1A, 103-1B, 103-1C is substantially aligned to the corresponding through opening 105A, 105B, 105C, thereby creating two or more flow passages. Within the meaning of the present disclosure, the first (angular) position of the plate 104 is referred to as the axis of the plate AX1 is arranged coincident or results parallel to the first (angular) position P1 of the housing 109. The axis of the plate AX1 extends from the center of the plate 104 to the first through hole 105, in particular, the axis of the plate AX1 passes through the center of the plate and the center of a through opening 105A, 105B, 105C.

In the example, by moving or rotating the first plate 104, it is possible to position the first plate 104 to the second (angular) position P2 being angularly separated 45 degrees from the first (angular) position P1 (not shown). Therefore, two flow passages are created since the through opening 105A is substantially aligned with the first fluid outlet 103-2A of the second outlet 103-2, and also the through opening 105B is substantially aligned with the second fluid outlet 103-2B of the second outlet 103-2. Within the meaning of the present disclosure, the second (angular) position of the plate 104 is referred to as the axis of the plate AX1 is arranged coincident or results parallel to the second (angular) position P2 of the housing 109.

Alternatively, by moving or rotating the plate 104 may position said first plate 104 into the third (angular) position P3 angularly separated 90 degrees from the first position P1 (not shown). Therefore, two flow passages may be created since the through hole 105A is substantially aligned with the first fluid outlet 103-3A of the third outlet 103-3, and also the through opening 105B is substantially aligned with the second fluid outlet 103-3B of the third outlet 103-3. Within the meaning of the present disclosure, the third (angular) position of the plate 104 is referred to as the axis of the plate AX1 is arranged coincident or results parallel to the third (angular) position P3 of the housing 109. These features for the first plate 104 may also be applied analogously to the second plate 204.

Figure 6 shows the first plate 104 being, in particular, a disk-shaped plate that present a diameter comprised in a range of 60 mm to 100 mm, or for example, as shown, 85mm. The through openings 105A, 105B, 105C of the first through hole are circular or elliptical (see figure 8), however, other shapes are not ruled out. A largest dimension of the through openings 105A, 105B, 105C may be 15 square mm. Other sizes may be provided to allow the first fluid f1 to flow through the through openings 105A, 105B, 105C as required. The group of fluid outlets are shaped in any shape which may allow a fluid to flow outside the first chamber 101 when the through openings 105A, 105B, 105C are at least partially in fluid communication with fluid outlets. These features for the first plate 104 may also be applied analogously to the second plate 204.

Figure 7B shows the first plate 104 is a movable disk-shaped plate arranged on the portion 111 of the housing. The first plate 104 is adapted for being rotated or moved such that the through openings 105A, 105B, 105C are not in fluid communication with any fluid outlet. In such an example, if no target surface is to be cleaned, the first disk 104 is, for example, in position NCP referred to as non-cleaning position, between a first position P1 and an eighth position P8. In any case, in the non-cleaning position NCP no fluid communication is provided, e.g. there is not alignment between the through hole and the outlets. As described further below, in the non-cleaning position NCP, the first control valve 41 does not allow any fluid to flow through any inlet 102.

When, for example, it is detected a need to clean the first target surface 601, for example, the lens of a vehicle front camera module, which may be associated, for example, with one or more fluid dispensers in fluid connection to the first position P1, at 0°, then the control unit ECU receives or generates the first washing command. Upon the first washing command, the control unit ECU generates the instruction to the operating means 300 to move or rotate the first plate 104 to the first position P1, 0° (see figure 7A). Also, the control unit ECU sends a signal to the first pressure generator, e.g. one or two or more pumps, to activate it so as to supply first fluid towards the first chamber 101. Further, the control unit ECU sends a signal, for example electrical signal, to the first control valve 41 to allow the passage of the first fluid into the first chamber 101. Once the first target surface 601 is cleaned and/or dried, i.e., without any optical impediment, the control unit ECU generates the instruction to the operating means 300 to rotate or bring the first plate 104 back to the initial position or non-cleaning position NCP. The control unit ECU sends a signal to the first pressure generator to deactivate it so as not to supply first fluid towards the first chamber 101. Further, the control unit ECU sends a signal, for example electrical signal, to the first control valve 41 to prevent the passage of the first fluid into the first chamber 101.

When, for example, it is detected a need to clean the second target surface 602, for example, the outer surface of a LIDAR sensor, which may be associated, for example, with one or more fluid dispensers 500 in fluid connection to an outlet of the second position P2, at 45°, then the control unit ECU receives or generate a second washing command. Upon the second washing command, the control unit ECU generates the instruction to the operating means 300 to move or rotate the first plate 104 to the second position P2, 45°. Also, the control unit ECU sends a signal to the first pressure generator to activate it so as to supply first fluid towards the first chamber 101. Further, the control unit ECU sends the signal, for example electrical signal, to the first control valve 41 to allow the passage of the first fluid into the first chamber 101. Once the second target surface 602 is cleaned and/or dried, i.e., without any optical impediment, the control unit ECU generates the instruction to the operating means 300 to rotate or bring the first plate 104 back to the initial position or non-cleaning position NCP.

When, for example, it is detected a need to clean a third target surface, for example, the lens of a camera module of a side digital mirror system, which may be associated, for example, with one or more fluid dispensers in fluid connection to an outlet of the third position P3, for example +90°, then, the control unit ECU receives or generates a third washing command. Upon the third washing command, the control unit ECU generates the instruction to the operating means 300 to move or rotate the first plate 104 to the third position P3, 90°.

Further, the control unit ECU sends a -electrical- signal to the first control valve 41 so that it allows the passage of the first fluid only when the first plate 104 has passed the second position P2. Advantageously, in the brief instant when the through openings 105A, 105B, 105C of the first hole 105 are aligned with the fluid outlets 103-2A, 103-2B of the housing of the first chamber in the second position P2 no fluid leakage occurs. The first fluid is advantageously only allowed to flow into the first chamber 101 when the first plate 104 is in the third position P3, or 90°. The control unit ECU may move in one direction or the other, e.g. clock wise or anti clock-wise, or stop moving, depending, for example, on a position signal sent by a position sensor. These features for the first plate 104 may also be applied analogously to the second plate 204.

In other examples not shown, the control unit ECU is configured to control the operating means 300, in at least two (linear) directions, a first direction in which the first through hole 105 is partially in fluid communication with the first and second outlets 103-1, 103-2 of the first chamber and a second direction in which a displacement allows that the movement in the first direction does not allow the first through hole 105 to be in fluid communication with the first and second outlets 103-1, 103-2 of the first chamber. For example, a vertical and an horizontal directions may be allowed by the operating means 300 such that the first through hole 105 may be vertically shifted so that the first through hole 105 result in a vertical position over or under the positions of the first and second outlets 103-1, 103-2 of the first chamber, and then, a horizontal movement may be possible such that once a selected outlet may be under or over a corresponding through openings, a further vertical movement allows a fluid communication between the selected outlet and the corresponding through opening 105A, 105B, 105C in a selected position.

As schematically illustrated in figure 1, the control unit ECU is configured to detect or receive an instruction that a target surface is dirty or has an optical contamination or needs to be cleaned. For example, if the first target surface 601 has an optical contamination, the control unit ECU detects that said first target surface 601 needs to be cleaned. If so, the control unit ECU generates a first washing command. Also, if the second target surface 602 has an optical contamination, the control unit ECU detects that said second target surface 602 needs to be cleaned. If so, the control unit ECU generates a second washing command. Further, if the third target surface has an optical contamination, the control unit ECU detects that said third target surface needs to be cleaned. If so, the control unit ECU generates a third washing command. The objective of the present cleaning system is to remove the optical contamination from one, two or more target surfaces 600.

The control unit ECU includes a memory for storing which outlets 103-1, 103-2, 203-1, 203-2 correspond to fluid dispensers 501, 502 associated to the target surface 601, 602 to be cleaned. Therefore, upon a washing command, the control unit ECU is configured to select one or more selected outlets from the outlets 103-1, 103-2, 203-1, 203-2. For example, according to the non-limiting example of figure 1, if the first target surface 601 needs to be cleaned, the control unit ECU is configured to select the first outlet 103-1 of the first chamber, and optionally the first outlet 203-1 of the second chamber. In this case, the first outlet 103-1 of the first chamber and the first outlet 203-1 of the second chamber are the selected outlets by the control unit ECU. Instead, if the second target surface 602 needs to be cleaned, the control unit ECU is configured to select the second outlet 103-2 of the first chamber, and optionally the second outlet 203-2 of the second chamber. In this case, the second outlet 103-2 of the first chamber and the second outlet 203-2 of the second chamber are the selected outlets by the control unit ECU. As explained, the selected (fluid) outlet(s) is/are comprised within the one or more outlets 103.

The control unit ECU is configured, upon the first washing command, to control the operating means 300 for providing a first fluid communication 108-1 for the first fluid f1 to be discharged onto at least the first target surface 601. The first fluid communication 108-1 is provided when the first through hole 105 and the first outlet 103-1 of the first chamber are at least in fluid communication with each other. As explained, the first target surface 601 is in fluid connection to the first outlet 103-1. In particular, the control unit ECU is configured to operate the first motor 311 for operating the first driving means 321 adapted for moving the first plate 104 so as to provide the first fluid communication 108-1 by positioning the first through hole 105 and the first outlet 103-1 at least in fluid communication with each other. This is, the first through hole 105 is moved until is at least partially in fluid communication with the first outlet 103-1, defining thereby at least a flow passage for the first fluid f1 to flow out from the first chamber 101 through the first outlet 103-1 towards the first target surface 601.

The control unit ECU is further configured, upon the first washing command, to control the operating means 300 for providing a second fluid communication 208-2 for the second fluid f2 to be discharged onto at least the first target surface 601. The second fluid communication 208-2 is provided when the second through hole 205 and the first outlet 203-1 of the second chamber are at least in fluid communication with each other. The first target surface 601 is also in fluid connection to the first outlet 203-1 of the second chamber. This is, the second through hole 205 is moved until is at least partially in fluid communication with the first outlet 203-1 of the second chamber, defining thereby at least a flow passage for the second fluid f2 to flow out from the second chamber 201 through the first outlet 203-1 of the second chamber towards the first target surface 601.

The control unit ECU is further configured, upon the second washing command, to control the operating means 300 for providing a third fluid communication 108-1 for the first fluid f1 to be discharged onto at least the second target surface 602. The third fluid communication 208-3 is provided when the fist through hole 105 and the second outlet 103-2 of the first chamber are at least in fluid communication with each other. The first target surface 601 is also in fluid connection to the second outlet 103-2 of the first chamber. This is, the first through hole 105 is moved until is at least partially in fluid communication with the second outlet 103-2 of the first chamber, defining thereby at least a flow passage for the first fluid f1 to flow out from the first chamber 101 through the second outlet 103-2 of the first chamber towards the second target surface 602.

The control unit ECU is configured to control the cleaning system for the first and/or second fluid to be ejected concomitantly (continuously) and/or sequentially.

According to an example, the second fluid communication 208-2 is provided at least in an instant of time where the first fluid communication 108-1 is provided. Therefore, the first and second fluid communication 108-1 and 208-2 are provided at least at the same time. It is advantageous to reduce the use of first liquid, e.g. washing liquid. Further, the second fluid is pressurized air that has at least two bars of pressure more than the washing liquid such that, in use, the pressurized air provides greater speed to the washing liquid towards the first and/or second target surfaces 601, 602. In particular, the washing liquid acquires a greater speed when the pressurized air enters into contact to the washing liquid inside the fluid dispenser or the feeding line between the outlets and the fluid dispenser 500. In this way the one, two, or more target surfaces 600 are cleaned with an improved efficiency.

According to an example, the fourth fluid communication 208-4 is provided at least in an instant of time where the third fluid communication 108-3 is provided. Therefore, the third and fourth fluid communication 108-3 and 208-4 are provided at least at the same time. Features of the first and second fluid communications 108-1, 208-2 apply analogously to the third and fourth fluid communications 108-3, 208-4.

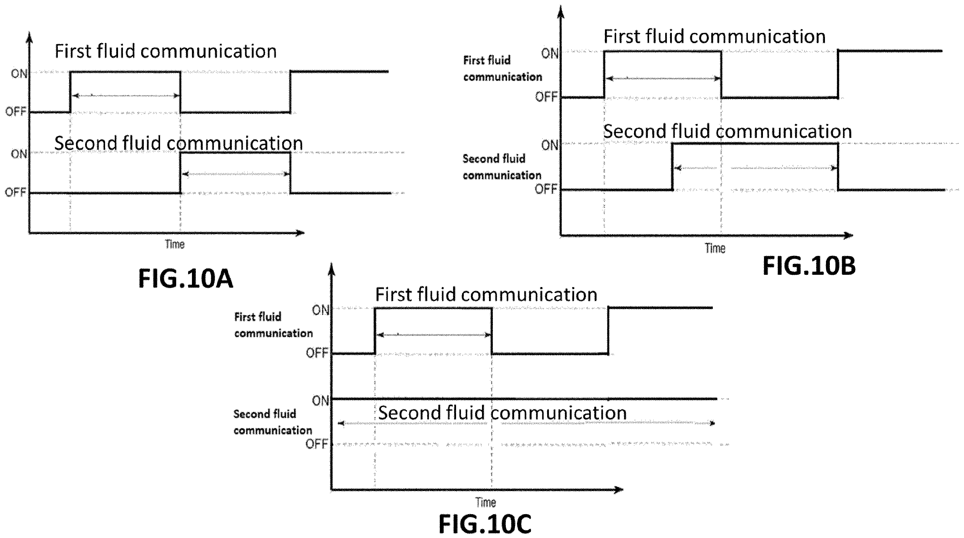

As illustrated in figures 10A-10C, the cleaning system ejects fluid at an alternating pulse. In particular, the second fluid communication 208-2 is provided (ON2 state) at least in an instant of time after preventing the first fluid communication 108-1 (OFF1 state) within a predefined time threshold. In examples, the alternating pulse comprises interrupting the fluid, in particular, interrupting the first fluid f1, e.g. preventing the first fluid communication 108-1 between the through hole 105 and the selected outlet such as the first outlet 103-1 of the first chamber. The predefined time threshold is a maximum time from the moment of time that the first fluid f1 is prevented from flowing out through the first outlet 103-1. Further, the predefined time threshold is pre-saved in the control unit ECU and has a duration, for example, of less than 0.5 seconds.

As shown in figure 10C, the first fluid f1 is discontinuous, e.g. has been interrupted (OFF1 state), while the second fluid is continuous (ON2 state). Alternatively, as shown in figures 10A and 10B, the first fluid f1 is discontinuous, e.g. has been interrupted (OFF1 state), when the second fluid f2 is also discontinuous, e.g. has been interrupted. In any case, in use, the second fluid f2 is ejected at least in an instant of time where the first fluid f1 is interrupted or prevented. In the example of figure 10A, the second fluid communication turns ON, when the first fluid communication turns OFF. Instead, according to the example of figure 10B, the second fluid communication turns ON before the first fluid communication turns OFF. In any case, as stated above, the second fluid f2 is ejected at least in an instant of time where the first fluid f1 is interrupted or prevented.

In particular, the cleaning cycle comprises:
- providing the first fluid communication 108-1, ON1 state, for the first fluid f1 to be discharged onto at least the first target surface 601 of between 0.1 and 100 cm3, particularly, between 0.1 and 10 cm3;
- preventing the first fluid communication 108-1, OFF1 state;
- providing a second fluid communication 208-2, ON2 state, for the second fluid f2 to be discharged onto at least the first target surface 601 at least in an instant of time after preventing the first fluid communication 108-1 within the predefined time threshold; and
- preventing the second fluid communication 208-2, OFF2 state, after providing the second fluid communication 208-2 for 0.1 to 2 seconds.

More in particular, the cleaning cycle further comprises a repetition of the above at least N times within a predetermined repetition time threshold, N being two or more times. The cleaning cycle of the first fluid f1 is: ON1-OFF1-ON1-OFF1. The second cleaning cycle of the second fluid f2 is: ON2-OFF2-ON2-OFF2. In examples, the control unit ECU is thus configured to control the cleaning system for ejecting the first and second fluids f1, f2 at an alternating pulse of ON1-OFF1-ON2-OFF2-ON1-OFF1-ON2-OFF2. Additionally, the predefined time threshold is shorter than the predetermined repetition time threshold. Further, the predetermined repetition time threshold has a duration of between 0.1 and 2 seconds providing a so called "machine gun" concept.

The first fluid f1 comprises washing liquid, and the second fluid f2 comprises pressurized gas. Further, the second fluid f2 has a pressure greater than a pressure of the first fluid. In particular, the second fluid f2 has at least one bar, particularly two bars, of pressure more than the first fluid f1 such that, in use, the second fluid f2 provides greater speed to the first fluid f1 towards at least the first target surface 601 and/or the second target surface 602.

More in particular, the cleaning cycle further comprises:
- providing the third fluid communication 108-3, ON3 state, for the first fluid f1 to be discharged onto at least the second target surface 602 of between 0.1 and 100 cm3, particularly, between 0.1 and 10 cm3;
- preventing the third fluid communication 108-3, OFF3 state;
- providing a fourth fluid communication 208-4, ON4 state, for the second fluid f2 to be discharged onto at least the second target surface 602 at least in an instant of time after preventing the third fluid communication 108-3 within the predefined time threshold; and
- preventing the fourth fluid communication 208-4, OFF4 state, after providing the fourth fluid communication 208-4 for 0.1 to 2 seconds.

More preferably, the cleaning cycle further comprises a repetition of the above at least N times within the predetermined repetition time threshold, N being two or more times.

The above-mentioned two fluid distribution selectors are operated by a method which may comprise ejecting a second fluid f2, the second fluid f2 being air, from the second chamber 201 through the first outlet 203-1 of the second chamber, at least in an instant of time when the first fluid f1, or washing liquid is not ejected; or ejecting the air at the same time as the washing liquid. In any case, the second fluid f2 provides greater speed to the first fluid f1 towards one or more target surfaces 600 providing a so called "machine gun" concept.

As shown in figure 1, the cleaning system further comprises a first control valve 41 in fluid communication with the first inlet 102. The control unit ECU is configured to operate the first control valve 41 such that, in operation, the first control valve 41 allows and/or prevents a flow of first fluid f1 from entering into the first chamber 101. In particular, the control unit ECU is further configured to operate the first control valve 41 such that, in use, prevents a flow of first fluid f1 from entering into the first chamber 101 during actuation of the operation means 300 until at least one through opening 105A, 105B, 105C of the first plate is at least partially in fluid communication with a selected fluid outlet, preventing thereby any flow passage for the first fluid f1 through any of the one or more outlets 103. In other words, the first control valve 41 is configured for preventing the first fluid 41 from being supplied into the first chamber 101 during actuation of at least the first plate 204 when a through hole 105 is not in fluid communication with a selected outlet. The first control valve 41 is arranged between the first chamber 101 and the first fluid pressure generator 710, including at the first chamber 101, e.g. in the first inlet 102, or in the first fluid pressure generator 710. In the shown non-limiting example of figure 1, the first inlet 102 comprises the first control valve 41. Optionally, the second inlet 202 comprises a second control valve 42. The first control valve 41 and the second control valve 42 comprises a solenoid. In this way, the first inlet 102 of the first chamber and the first inlet 202 of the second chamber are provided with a solenoid for the allowance or prevention of the first and second fluids respectively.

In particular, the control unit ECU is further configured to operate the first control valve 41 such that, in operation, prevents a flow of first fluid f1 from entering into the first chamber 101 at least during a movement of the first plate 104 until at least the first through hole 105 of the first plate is at least partially in fluid communication with at least one selected fluid outlet. It prevents thereby any flow passage for the first fluid f1 through any of the fluid outlets different from the at least one selected fluid outlet. As stated above, the at least one selected fluid outlet is one or more of the fluid outlets. For example, the control unit ECU is configured to operate the first control valve 41 for preventing the first fluid f1 from entering into the first chamber at least when the first plate 104 is moving to achieve the alignment between the first through hole 105 and the first fluid outlet 103-1. If, for example, the control unit ECU receives or generates the second washing command for cleaning the second target surface 602, the control unit ECU is configured to operate the first control valve 41 for preventing the first fluid from entering into the first chamber at least when the first plate 104 is moving to achieve the alignment between the first through hole 105 and the second outlet 103-2.

Figure 5A schematically illustrates a side view of an example of the cleaning system comprising the first fluid distribution selector 100 and the second fluid distribution selector 200. As shown, the operating means 300 is connected to at least the first plate 104 and the second plate 204. The control unit ECU is configured to control the operating means 300, e.g. the first driving means 321, upon the first washing command, for moving the first plate 104 at least relative to the first inner space 110 until at least one of the one or more through holes 105 of the first plate is at least partially in fluid communication with the first fluid outlet 103A. The control unit ECU is configured to control de operating means 300, e.g. the second driving means 322, upon the first washing command, for moving the second plate 204 at least relative to the second inner space 210 until at least one of the one or more through holes 205 of the second plate is at least partially in fluid communication with the second outlet 203A. In this way, it is defined thereby at least a first flow passage 108A for the first fluid f1 to flow out from the first chamber 101 through at least the first fluid outlet 103A towards the first target surface 601, and it is also defined thereby at least a second flow passage 208A for the second fluid f2 to flow out from the second chamber 201 through at least the second outlet 203A towards the first target surface 601.

Still in figure 5A, the control unit ECU is configured to operate the operating means 300, e.g. the first driving means 321, upon a second washing command, for moving the first plate 104 at least relative to the inner space 110 until the through hole 105 of the first plate is at least partially in fluid communication with the third fluid outlet 103B, defining thereby at least a third flow passage 108B for the first fluid f1 to flow out from the first chamber 101 through the third outlet 103B towards the second target surface 602. Further, the control unit ECU is configured to operate the operating means 300, e.g. the second driving means 322, upon the second washing command, for moving the second plate 204 at least relative to the second inner space 210 until the second through hole 205 is at least partially in fluid communication with the fourth outlet 203B, defining thereby at least a fourth flow passage 208B for the second fluid f2 to flow out from the second chamber 201 through the fourth outlet 203B towards the second target surface 602.

Figure 8 shows the first driving means 321 is a shaft member attached to the front surface 1091 of the housing of the chamber, e.g. portion 111. Further, the through openings 105A, 105B, 105C of the first through hole 105 are not aligned in a single straight direction. Still, the through opening 105A is further away from the axis of rotation AXR than the through opening 105B. Furthermore, the through opening 105B is further away from the axis of rotation AXR than the through opening 105C. Also, the first fluid outlet 103-1A of the first outlet 103-1 includes an elliptical shape. In the shown example, the through opening 105A is substantially aligned with the first fluid outlet 103-1A. Thus, a first fluid communication is provided.

Figure 9 schematically illustrates an example where the cleaning system comprises two fluid distribution selectors 100, 200 where the first and second plates 104, 204 are rotated synchronously. This is, they move in tandem. In the example, the operating means 300 comprises a transmission belt (dashed line) engaged with the first and second plates 104, 204. As shown, the transmission belt is arranged around a portion the first plate 104 and a portion of the second plate 204. In use, the second plate 204 rotates as the first plate 104 rotates at the same angular speed. The transmission belt extends in a direction perpendicular to the fluid when flowing out the first and second chamber 101, 102, e.g. contained in a plane that is arranged perpendicular to the first and second fluid communication 108-1, 208-2.

The first fluid distribution selector 100 provides the first communication 108-1 while the second distribution selector 200 prevents the second fluid communication 208-2. As shown, the through openings 105A, 105B, 105C are substantially aligned with the fluid outlets 103-1A, 103-1B and 103-1C respectively, wherein the through openings 205A, 205B, 205C of the second through hole 205 are misaligned with fluid outlets 203-1A, 203-1B and 203-1C of the first outlet 203-1 of the second chamber 201. Further, the control unit ECU makes the (single) motor or actuator to move the transmission belt to rotate both first and second plates 104, 204 in unison, e.g. in the same angular speed, such that the second fluid distribution selector 200 provides the second communication 208-2 while the first distribution selector 100 prevents the first fluid communication 108-1 (not shown). This is, the through openings 205A, 205B, 205C are substantially aligned with the fluid outlets 203-1A, 203-1B and 203-1C respectively, wherein the through openings 105A, 105B, 105C of the first through hole 105 are misaligned with the fluid outlets 103-1A, 103-1B and 103-1C (not shown). The first or the second target surface 601, 602 is thus supplied by the first and the second fluid f1, f2 ejected at alternating pulse by merely moving the transmission belt in one direction and opposite direction repeatedly. In this implementation, the so-called "machine gun" concept may be easily achieved.

The control unit ECU is further configured to synchronously operate the first and second fluid pressure generator for the supply of the first and second fluids into the first and second chambers 101, 201. Further, as stated above, the control unit ECU is configured to operate at least the first control valve 41 and/or a second control valve 42, and the first fluid pressure generator and/or the second fluid pressure generator for the supply of the first and/or second fluids towards at least the first and/or second target surfaces 601, 602 according to the first and/or second washing command.

In examples, the control unit ECU may work synchronously with two fluids, e.g. the first fluid f1 and the second fluid f2. In examples, the first fluid f1, e.g. washing liquid, is used to wash and afterwards the second fluid f2, e.g. pressurized gas, is used at least to dry. In examples, both washing liquid and pressurized gas are used at the same time. Both pressurized air and washing liquid may be allowed to flow towards a single fluid dispenser, or they may flow towards different fluid dispensers, e.g., one nozzle for water and one for air.

In examples, washing liquid may be sprayed, and pressurized gas may be sprayed at the same time such that the pressurized gas gives the washing liquid an output speed. Also, the consumption of washing liquid is reduced and the cleaning efficiency may be increased. For example, the washing liquid pressure may not reach a desired pressure and the compressed air may help raise the pressure providing thereby an exit speed. In this case, a single nozzle may be used to allow the two mixed fluids to flow.

The control unit ECU is further configured to synchronously operate the operating means 300, the first fluid pressure generator 710 and the second fluid pressure generator 720 for providing the second fluid communication 208-2 at least in an instant of time after the (first) fluid communication 108-1 is prevented within a predefined time threshold. As explained, the pressure of the first fluid f1 is lower than the second fluid f2 such that, in use, the second fluid provides greater speed to the first fluid f1 towards the target surface.

Although only a number of examples have been disclosed herein, other alternatives, modifications, uses and/or equivalents thereof are possible. Furthermore, all possible combinations of the described examples are also covered. Thus, the scope of the present disclosure should not be limited by examples but should be determined only by a fair reading of the claims that follow.

## Claims

1. A cleaning system comprising:
- a chamber (101) including one or more inlets (102) for supplying a fluid (f1) into the chamber (101), and one or more outlets (103) for distributing the fluid (f1) out from the chamber (101) towards one or more target surfaces (600) to be cleaned;
- a plate (104) including a through hole (105) configured to let the fluid (f1) to pass through thereof, wherein the plate (104) is at least partially arranged inside the chamber (101);
- an operating means (300) connected at least to the plate (104); and
- a control unit (ECU), upon a washing command, being configured to control the operating means (300) for moving the plate (104) so as to provide a fluid communication (108-1) for discharging the fluid (f1) onto one or more target surfaces (600), wherein the fluid communication (108-1) is provided at least when the through hole (105) and an outlet (103-1) of the chamber are in fluid communication with each other, defining thereby at least a flow passage for the fluid (f1) to flow out from the chamber (101) through the outlet (103-1) towards at least a target surface (601), and wherein the target surface (601) is in fluid connection to the outlet (103-1) of the chamber.

2. The cleaning system of claim 1, wherein it further comprises a second chamber (201) including one or more inlets (202) for supplying a second fluid (f2) into the second chamber (201), and one or more outlets (203) for distributing the second fluid (f2) out from the second chamber (201) towards one or more target surfaces (600) to be cleaned; and
wherein the control unit (ECU) is further configured to control the cleaning system for providing a second fluid communication (208-2) for discharging the second fluid (f2) onto at least the target surface (601) through an outlet (203-1) of the second chamber, wherein the target surface (601) is in fluid connection to the outlet (203-1) of the second chamber.

3. The cleaning system of claim 2, wherein it further comprises a second through hole (205) configured to let the second fluid (f2) to pass through thereof and being at least partially arranged inside the second chamber (201), wherein the second through hole (205) is further arranged in the plate (104) or in a second plate (204) that is connected to the operating means (300);
wherein the control unit (ECU) is further configured to control the operating means (300) for moving the plate (104) or the second plate (204) so as to provide the second fluid communication (208-2) at least when the second through hole (205) and the outlet (203-1) of the second chamber are in fluid communication with each other, defining thereby at least a flow passage for the second fluid (f2) to flow out from the second chamber (201) through the outlet (203-1) of the second chamber towards at least the target surface (601), and wherein the target surface (601) is in fluid connection to the outlet (203-1) of the second chamber.

4. The cleaning system of claims 2-3, wherein the second fluid communication (208-2) is provided at least in an instant of time after preventing the fluid communication (108-1) within a predefined time threshold; or
the second fluid communication (208-2) is provided at least in an instant of time where the fluid communication (108-1) is provided.

5. The cleaning system of claims 2-4, wherein the control unit (ECU) is further configured, upon the washing command, to control the cleaning system for discharging the fluid (f1) and/or the second fluid (f2) with a cleaning cycle that includes an alternating pulse.

6. The cleaning system of claim 5, wherein the cleaning cycle comprises:
• providing the fluid communication (108-1) so as to discharge the fluid (f1) onto at least the target surface (601); and
• preventing the fluid communication (108-1),
wherein the cleaning cycle further comprises a repetition of the above at least N times within a predetermined repetition time threshold, N being two or more times.

7. The cleaning system of claim 6, wherein the cleaning cycle further comprises:
• providing the second fluid communication (208-2) so as to discharge the second fluid (f2) onto at least the target surface (601) at least in an instant of time after preventing the fluid communication (108-1), the second fluid communication (208-2) being provided within a predefined time threshold; and
• optionally preventing the second fluid communication (208-2), preferably by moving the second through hole (205) such that, in use, the second through hole (205) and the outlet (203-1) of the second chamber are not in fluid communication with each other,
wherein the cleaning cycle further comprises a repetition of the above at least N times within a predetermined repetition time threshold, N being two or more times.

8. The cleaning system of claims 2-7, wherein the fluid (f1) comprises a washing liquid, and the second fluid (f2) comprises a pressurized gas;
wherein the second fluid (f2) has a pressure greater than pressure of the fluid (f1), preferably by at least two bars;
wherein, in use, the second fluid (f2) provides greater speed to the fluid (f1) towards at least the target surface (601).

9. The cleaning system of any preceding claim, wherein it further comprises a fluid dispenser being supplied with the fluid (f1) and the second fluid (f2) and is configured to eject the first and second fluids (f1, f2) through the same orifice onto at least the target surface (601).

10. The cleaning system of any preceding claim, wherein the one or more outlets (103) of the chamber comprises a second outlet (103-2) in fluid connection at least to a second target surface (602), wherein the one or more outlets (203) of the second chamber comprises a second outlet (203-2) in fluid connection at least to the second target surface (602), and wherein the control unit (ECU), upon a second washing command, is configured to
• control the operating means (300) for providing a third fluid communication (108-3) so as to discharge the fluid (f1) onto at least the second target surface (602), wherein the third fluid communication (108-3) is provided when the through hole (105) and the second outlet (103-2) of the chamber are in fluid communication with each other, defining thereby at least a flow passage for the fluid (f1) to flow out from the chamber (101) through the second outlet (103-2) of the chamber towards at least the second target surface (602); and
• provide a fourth fluid communication (208-4) so as to discharge the second fluid (f2) onto at least the second target surface (602).

11. The cleaning system of claim 10, wherein the control unit (ECU) is further configured to control the operating means (300) for providing the fourth fluid communication (208-4), wherein the fourth fluid communication (208-4) is provided when the second through hole (205) and the second outlet (203-2) of the second chamber are in fluid communication with each other, defining thereby at least a flow passage for the second fluid (f2) to flow out from the second chamber (201) through the second outlet (203-2) of the second chamber towards at least the second target surface (602).

12. The cleaning system of any preceding claim, wherein the control unit (ECU) is further configured to control the operating means (300) to move the plate (104) when the fluid (f1) is not entering into the chamber (101).

13. The cleaning system of any preceding claim, wherein it further comprises a control valve (41) arranged in fluid connection with the one or more inlets (102) of the chamber, wherein the control unit (ECU) is configured to operate the control valve (41) such that, in operation, the control valve (41) allows and/or prevents a flow of fluid (f1) from entering into the chamber (101).

14. The cleaning system of any preceding claim, wherein the first outlet (103-1) of the chamber comprises a group of fluid outlets (103-1A, 103-1B, 103-1C) such that, in use, the through hole (105) is in fluid communication with two or more fluid outlets (103-1A, 103-1B, 103-1C) of the first outlet, defining thereby at least two or more flow passages for the fluid (f1) to flow out from the chamber (101) for cleaning at least two or more target surfaces at the same time, the two or more target surfaces being in fluid connection to the two or more fluid outlets (103-1A, 103-1B, 103-1C).

15. A method for operating a cleaning system, the method comprising:
- generating or receiving, by a control unit (ECU), a washing command;
- preferably, operating a fluid pressure generator for supplying a fluid (f1) towards a chamber (101);
- preferably, preventing the fluid (f1) from entering into an inner space (110) of the chamber;
- providing a first fluid communication (108-1) between a through hole (105) and a first outlet (103-1) of the chamber by moving a plate (104) arranged in the inner space (110) that includes the through hole (105);
- preferably, allowing the fluid (f1) to enter into the inner space of the chamber (101);
- discharging the fluid (f1) onto at least a target surface (601) to be cleaned in fluid connection to the first outlet (103-1); and
- preferably, preventing the fluid (f1) from entering into the inner space (110) of the chamber after discharging the fluid (f1) onto at least the target surface (601).
